# EUROPEAN PATENT APPLICATION

(11) **EP 1 764 760 A1**
(43) Date of publication of application: **21.03.2007**
(21) Application number: 05077119.5
(22) Date of filing: 16.09.2005
(51) Int. Cl.: G09B 5/00

(54) **An e-learning system and a method of e-learning**

(71) Applicant: SAP AG, 69190 Walldorf (DE)
(72) Inventor: Krebs, Andreas, 76137 Karlsruhe (DE); Erhard, Martin, 76227 Karlsruhe (DE); Philipp, Marcus, 69234 Dielheim (DE)
(74) Representative: Winckels, Johannes Hubertus F.

(57) **Abstract**

The invention relates to an e-learning system and method for delivering one or more
learning resource to a common group of users at one or more user terminals, the system including: a learning resource server for storing the one or more learning resource for delivery to at least one of the common group of users at one or more user terminals, an administration server, arranged to serve the common group of users at the one or more user terminals, a system and method for tracking and maintaining meta data for describing the learning resource in accordance with the common group of users' requirements.

## Description

### Technical Field

The invention relates to an e-learning system and a method of e-learning.

### Background to the Invention and Prior Art

Systems and applications for providing e-learning, also referred to in the art, *inter alia,* as computer based training, computer assisted instruction and technology supported learning, are known. Such applications and systems use content, for example, lectures and book chapters, which are delivered to users electronically. In order to describe the e-learning content, meta data is associated with the content. XML (extensible mark-up language) based standards is one technology, which is conventionally used to define meta data. It has been found when certain meta data formats are used, tracking the meta data in these formats is problematic.

It is an object of the present invention to address the problem of tracking meta data in e-learning systems.

### Summary of the Invention

According to a first aspect of the invention, there is provided an e-learning system for delivering one or more learning resource to a common group of users at one or more user terminals, the system including:
a learning resource server for storing the one or more learning resource for delivery to at least one of the common group of users at one or more user terminals, an administration server, arranged to serve the common group of users at the one or more user terminals, for tracking and maintaining a set of meta data for describing the learning resource in accordance with the common group of users' requirements.

According to a second aspect of the invention, there is provided a method of e-learning, the method comprising delivering one or more learning resource to a common group of users at one or more user terminals, the method further including: storing in a learning resource server the one or more learning resource for delivery to at least one of the common group of users at one or more user terminals, serving the common group of users at the one or more user terminals, tracking and maintaining a meta data for describing the learning resource in accordance with the common group of users requirements.

According to a third aspect of the invention, there is provided a user terminal comprising means operable to perform the method of claim 32.

According to a fourth aspect of the invention, there is provided a program storage device readable by a processing apparatus, the device embodying a program of instructions executable by the processor to perform the method of claim 32.

### Brief description of the drawings

In order that the invention may be more fully understood embodiments thereof will now be described by way of example only, with reference to the figures in which:
Figure 1 shows an architecture incorporating an embodiment of the present invention;
Figure 2 shows a user interface of an extraction tool integrated in the e-learning application authoring environment according to an embodiment of the invention;
Figure 3 shows a user interface of the authoring environment according to an embodiment of the invention;
Figure 4 shows an learning solution authoring environment including a meta data editor which can be used to maintain the meta data values according to an embodiment of the invention;
Figure 5 shows a user interface of the authoring environment according to a further embodiment of the invention;
Figure 6 shows a user interface of the learning resource server showing how metadata are displayed in the content management system of the learning resource server;
Figure 7 shows a user interface of a search tool for searching content using metadata according to an embodiment of the invention, and
Figure 8 shows a user interface showing the results of a search.
Like reference numerals in the various figures indicate like elements.

### Description of the Preferred embodiments

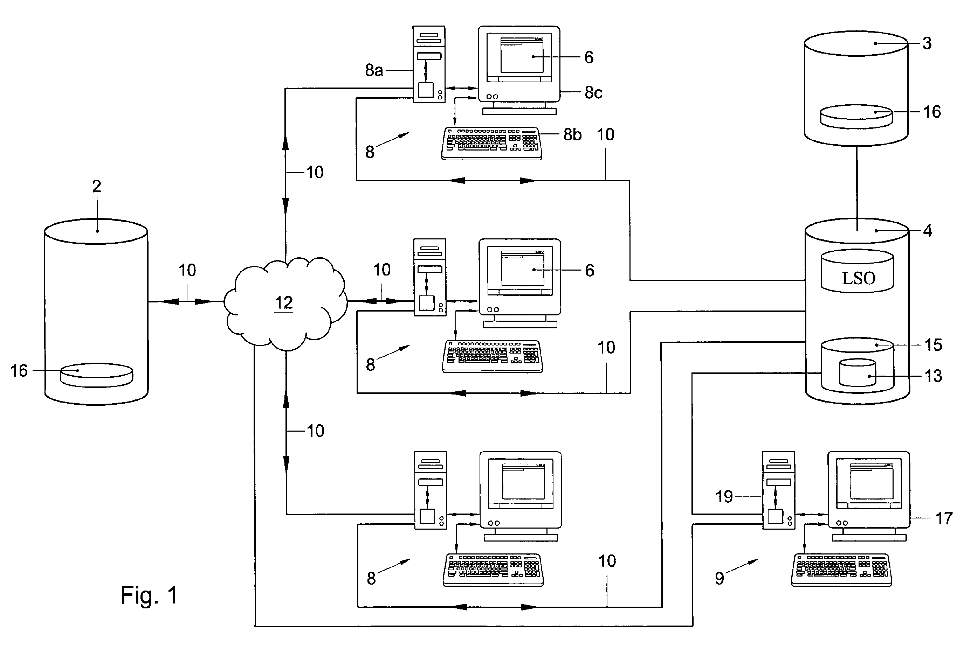

Figure 1 shows an architecture incorporating an embodiment of the present invention. The architecture includes an e-learning system 2, 4 for delivering one or more learning resource 6 to common group of users 8. The system includes a learning resource system, also referred to as a content server, 2, for storing the one or more learning resource for delivery to at least one of the common group of users at one or more user terminals 8. The one or more user terminal 8 typically comprises a processor and a storage device 8a, for example, a hard drive. To interact with a user, the user terminal may comprise a keyboard and pointing device 8b, or the like and a display, for example, a monitor including a screen. The user terminal may be a desktop unit. Alternatively, it may be a handheld device, or the like, such as a laptop computer, etc. Data may be exchanged between the processor and the storage device in the hard drive. It may also be exchanged between the keyboard and the display and between the display and the hard drive. In Figure 1 arrows linking entities indicates that data may be exchanged between such linked entities.

The system further includes an administration system 4 arranged to serve the common group of users at the one or more user terminals, for storing a set of meta data for describing the learning resources. The meta data has a meta data format. Information may be provided to indicate whether the fields described by the meta data are mandatory or optional. This information may be format inherent. In an alternative embodiment, the information is defined as customizable meta data. In particular, in one embodiment, the set of meta data is a set of customizable meta data in a customizable format. The customizable format includes a non-semantic tag which is customisable in accordance with the common group of users. Alternatively, the meta data is provided in a format which includes a definition with respect to a property of a field which the meta data describes. As mentioned above, the property may include whether the field is mandatory or optional.
The users are connected to the administration system 4 and the learning resource system 2 by communication links over which data may be communicated. In the embodiment shown, the learning resource system 2 is connected to the user terminals 8 and learning resource system 2 via the internet 12, or the like. In an alternative embodiment, the learning resource system 2 and the administration system 4 are provided on the same communications network. For example, on a network provided within one organisation, such as an intranet, LAN (local area network), or the like.

A group of common users may be a group of users having substantially similar requirements in terms of the meta data they desire to describe the learning resource or resources they are interested in. The group of common users may be based in an organisation, or may be distributed amongst a variety of different organisations. Organisations include, but are not limited to, enterprises including companies and the like, non-profit organisations, such as charities, universities, schools and other learning establishments. The group of common users may be served by the same server. Alternatively, they may be served by different servers.

The administration system may be implemented using a server 4, such as, for example, the SAP R/3 4.6C and learning solution (LSO) Add-on, which may also be referred to as the LSO backend. The administration system 4 may include a database of learner accounts and course information. In particular, it may be a platform as part of the LSO to enable the administration of e-learning, for example, the business of delivering and creating content. For example, the database may include the learner account, may include demographic data about the learner, for example, a name, an age, a sex, an address, a company, a school, an account number and a bill. It may further include his/her progress through the course material. For example, places visited, tests completed, skills gained, knowledge acquired and competency using the material. The administration system 4 may also provide additional information about courses, such as the courses offered, the author/instructor of a course and the most popular courses. Further, in an embodiment of the invention, since the meta data format itself does not contain any semantic information, the semantic organization, or common group of users, wide information about the meta data values is stored in a central dictionary. For example, in the administration system 4. However, in an alternative embodiment, the dictionary storing the semantic information may be stored in another database accessible to the group of users or organization. For example, in the learning resource system 2 The learning resource system 2 may include a learning content server 2. The learning content server 2 may be implemented using an WebDAV server. The learning content server 2 may include a content repository 16. The content repository 16 may store course files 6 and media files 6 that are used to present a course to a learner at the learning station 8. The course files 6 may include the structural elements that make up a course and may be stored as XML files The media files may be used to store the content that is included in the course and assembled for presentation to the learner at the learning station.
The learning resource system may include a content player. The content player may be implemented using a server, such as, an SAP J2EE Engine. The content player is used to obtain course material from the content repository 16.

The learning resource system 2 may also include an interface for exchanging information with the administration system 4. For example, the content player may update the learner account information as the learner progresses through the course material. The administration system 4 is provided with a user interface generator for generating a user interface 17. The user interface interfaces with a user at a user terminal 9 on behalf of the common group of users. Meta data is defined as mandatory and optional. The meta data may also be mandatory or optional, because the format simply requires them. Alternatively, the meta data is provided in a customizable format, wherein it is possible to customize which fields are mandatory in the e-learning system, even if the format itself does not make them mandatory. In one embodiment, the user, via the user interface 17, customizes a predetermined one or more meta data as mandatory, so that the one or more learning resource enters the e-learning system with the required meta data.

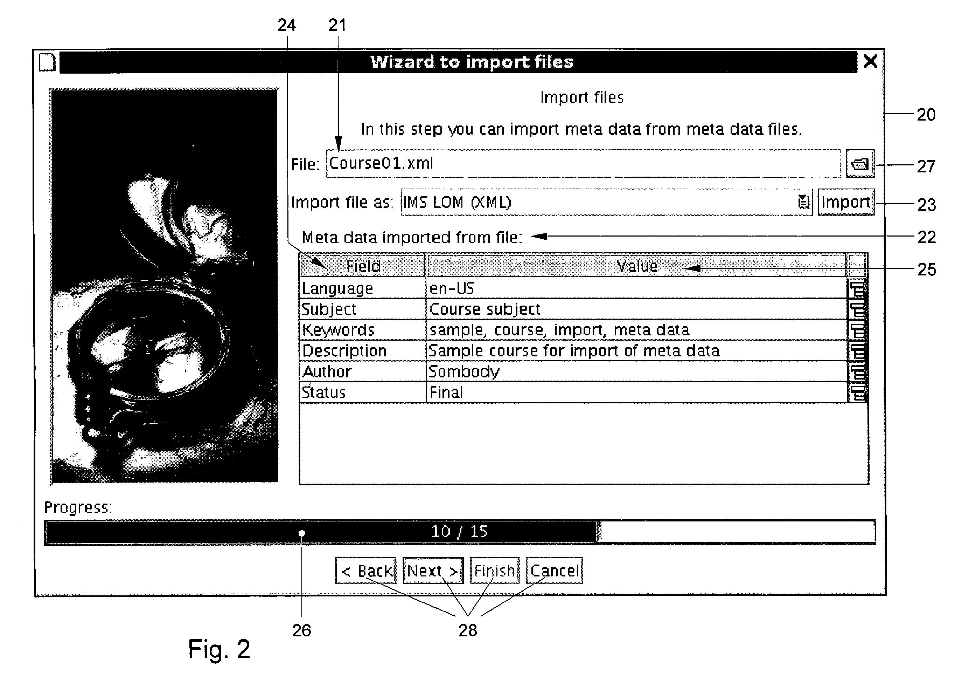

The administration server 4 may further include an authoring environment 15 including a user interface generator for generating a user interface 17 for interfacing with a user on behalf of the common group of users, for authoring the one or more learning resource. Via the user interface, the user can use the authoring environment to process learning resources. For example, the authoring environment can be used to import, create, edit, check a learning resource into a central server 2, access and search learning resources. In one embodiment, the authoring environment 15 is arranged to import one or more learning resource from a third party learning resource server 3 and having meta data in a third party format, and transform the meta data in the third party format in to the meta data format used in the e-Learning System. The third party server 3 includes a content repository 16 in which one or more learning resource is stored. In one embodiment, during processing of the one or more learning resource by the authoring environment 15, the one or more learning resource is stored on a local computer 19. The local computer may be computer at which the user on behalf of the common group of users is working. Alternatively, it may be a different computer. The learning resource server 2 is a central server. The central server 2 can serve the common group of users. The user on behalf of the common group of users can also exchange data with the central server. In particular, a learning resource can be checked into the central server by the user. The authoring environment comprises a check-in tool 13. The check-in tool 13 is arranged so that once the user has completed one or more activities in the authoring environment 15, the one or more learning resource processed in the authoring environment is checked into the central server 2.
The functioning of the authoring environment is now described in more detail with reference to Figures 2 to 7. According to an embodiment of the invention, meta data of course content in an e-learning system is tracked. The invention may be implemented, for example, in the SAP Learning Solution (LSO). For processing the meta data, a customizable e-learning metadata format is used. The tracking is achieved by allowing/enforcing the maintenance and access of the meta data at all stages of the content processing in the authoring environment.
The authoring environment can be used to carry out the authoring process of the e-learning content in the SAP Learning Solution in the following way:
step 1: Content may be imported. This step is necessary, as mentioned above, when content is created and stored on a third party server 3.
step 2: Content is created/edited.
step 3: Content is checked into the central server 2, and
step 4: Accessing/Searching may be carried out on already existing content. The content is comprised of the one or more learning resource.

In the following, it is described how the meta data is tracked and accessed during the steps 1-4.
Step 1: If content is imported from a third party server 3, the third party meta data format is transformed into the e-Learning systems meta data format, for example, transforming meta data in an XML format to the customizable LSO metadata format. Extensible stylesheet language transformations (XSLTs) may be used or some other way for transforming from one metadata format into another.
The authoring environment is arranged to at least one of import and export meta data in a format by transforming the format into or from another meta data format in a predefined standard, for example an XML format
In one embodiment, the meta data is stored together with the one or more e-learning resource.
Figure 2 shows a user interface 20 of an extraction/transformation tool, which may be used for example, to import 3^{rd} party content, integrated in the e-learning application authoring environment 15 according to an embodiment of the invention. The user is a user acting on behalf of the common group of users. The user may be a member of the group. Alternatively, he may not. The user working in the authoring environment is typically an administrator or author for the e-learning course. The user is informed via the user interface that in this step (step 1), meta data can be imported from meta data files. In particular, it can be seen in Figure 2 that the file 21 to be imported containing the meta data describing a learning resource is in an XML format. The file 21 is imported by the user clicking on the import icon 23. The field in front of the import button can be used to select the transformator according to the format of the 3^{rd} party meta data file: The user can select the metadata file to be imported using the file open icon 27, in order to open a file to be imported. The meta data 22 imported from the file is listed. The meta data 22 has fields 24 including language, subject, keywords, description, author and status. For each field 24 of meta data there is a meta data value 25, for example, the meta data value 25 for the field 24 "Author" is "Sombody". The user is kept informed of the progress of the complete content import process by progress bar 26. It is to be noted that the import of the meta data is simply one step in the complete import process.*ok* The user is provided with option icons 28 providing him with options such as, "Back", "Next", "Finish" and "Cancel".
After the imported has been completed, the content, for example, the learning resource and meta data is stored on the local computer 19 in Figure 1, and is not yet uploaded to the central content server 2. Thus, at this stage, only the imported meta data is maintained. It is not necessary to maintain, at this stage, any other meta data.

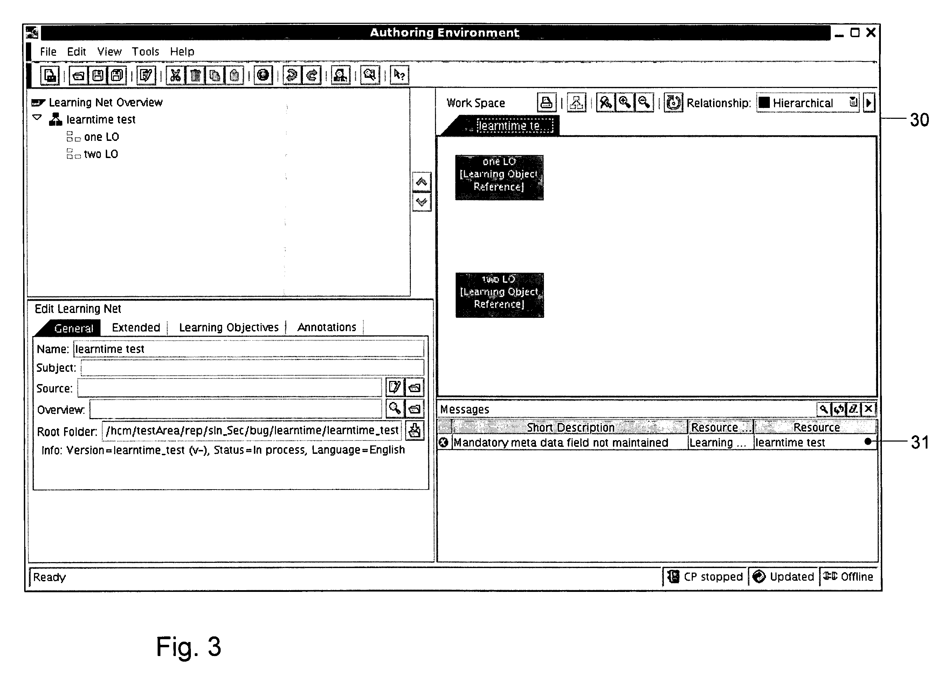

Step 2: during the editing of objects on the local computer, the maintenance of the meta data is still optional. However, the not maintained meta data is reported in the user interface as an error or warning. If the unmaintained meta data is customized as being mandatory, the user interface reports the non-maintenance as an error. On the other hand, if the unmaintained meta data is customized as being optional, the user interface reports the non-maintenance as an warning, which is less serious, since the meta data is not regarded as being essential by the common group of users in accordance with their customized profile. The profile includes which fields 22 of metadata format are mandatory, which are optional and which are additional. According to such a profile a learning resource is made available to the common group of users once all meta data corresponding to the mandatory fields is available/maintained. Figure 3 shows a user interface of the authoring environment according to an embodiment of the invention, where the error for missing meta data is displayed. In particular, Figure 3 shows a user interface 3.0 including an error message 31. The error message 31 informs the user that a mandatory meta data field is not maintained.

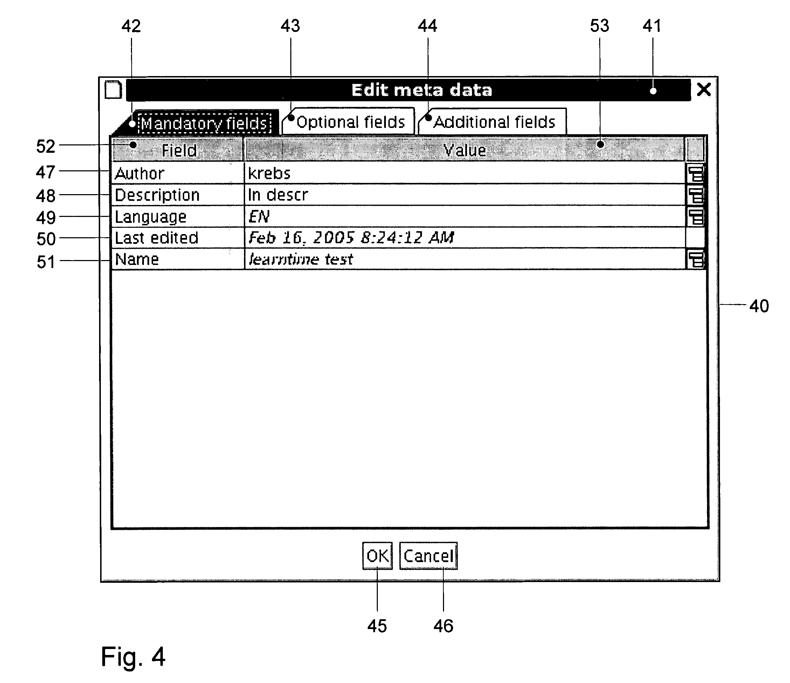

As shown with reference to Figure 4, the meta data, in particular the meta data corresponding to the mandatory fields, can be maintained in a meta data editor, which is provided as part of the authoring environment.
Figure 4 shows an learning solution authoring environment including a meta data editor which can be used to maintain the meta data values according to an embodiment of the invention. In particular, Figure 4 shows an example of a screen shot of the learning solution authoring environment where the meta data for an e-learning course can be maintained. In the SAP Learning Solution the information about the meta data fields, their data type and whether they are mandatory or optional is retrieved from the learning solution customizing stored, for example, on the R/3 LSO backend. The meta data values are read from the e-learning courses XML meta data file. In particular, Figure 4 shows a user interface including a screen 40 wherein which the user can edit meta data.
Figure 4 shows an learning solution authoring environment which can be used to maintain the meta data values according to an embodiment of the invention. In particular, Figure 4 shows an example of a screen shot of the learning solution authoring environment where the meta data for an e-learning course can be maintained. The information about the meta data fields, their data type and whether they are mandatory or optional is retrieved from the learning solution customizing stored, for example, on the R/3 LSO backend. The meta data values are read from the e-learning courses XML meta data file. In particular, Figure 4 shows a user interface including a screen 40 wherein which the user can edit meta data. The screen displays at least one of mandatory tab strip 42, optional tab strip 43 and additional tab strip 44.
The tab strips 42, 43, 44 show where the fields are grouped according to their mandatory indication. For example, the Mandatory fields tab 42 contains all metadata customized as mandatory. The Optional tab 43 contains all metadata customized as not mandatory. The Additional tab 44 contains all metadata values encountered, that are not defined in the customizing. For example, this may occur if the customizing is changed or metadata from foreign systems is imported.
In each of the three tabs 42, 43, 44 each row 47-51 represents a metadata as customized. The Field column 52 contains the language dependent description as entered in the customizing, except for the additional fields where the content of the NAME attribute from the metadata file is used, since there is no customizing for this metadata.
The value column 53 contains the value as stored in the metadata file if it is available, otherwise no value is displayed. The value cells that do not allow input are metadata the authoring environment automatically maintains which the user therefore the user cannot change..
The third row on each tab is a single icon which would switch the row to multi line editing in order to enter a value that does not fit into a single line.
The user is able to edit the fields 47, 48, 49, 50,51, also referred to as data types, in order to maintain the meta data. In particular, the user is able to maintain the field (i.e. the data type, also referred to as the meta data description with reference to Figure 3). In a further embodiment, the screen includes at least one of an confirm icon 45 whose selection by a users saves the edited meta data and a cancel icon 46 whose selection by a user cancels the edited meta data.

In one embodiment, a user interface generator for generating a user interface 40 which a user can interact with to maintain the meta data in accordance with the user's or the common group of users' requirements. Further, the user interface 40 may includes a screen displaying one or more fields wherein at least one of a meta data identification, a mandatory indication, a data type and a metadata description may be entered, respectively. Further, the user interface includes a screen wherein which the user can edit meta data. In a further embodiment, the screen displays at least one of mandatory fields, optional fields and additional fields.

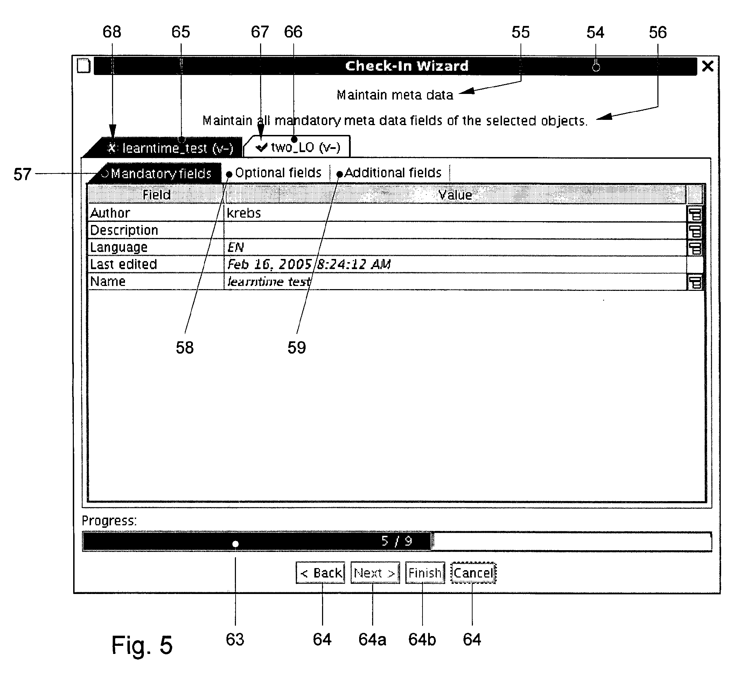

Step 3: after a user (author) completes editing a course, the course is checked into the central content server 2. Once the content is checked in, it becomes available to the common group of users. Thus, at this point, the meta data is to be maintained. The check-in tool is arranged to check-in one or more learning resource to the central server only when the mandatory meta data is maintained according to a predefined customizable profile determined in accordance with the common group of users' requirements. In this way, it is enforced that the courses entering the central server 2 have maintained meta data according to the defined customizing. Figure 5 shows a user interface of the authoring environment according to a further embodiment of the invention. In particular, Figure 5 shows a screen shot of the authoring environment's check in interactive utility that guides the user through the task of checking in. Such an interactive utility is also referred to as a wizard. The check-in wizard 54 informs the user that the meta data is to be maintained 55. In particular, the user is informed that all mandatory meta data filed of the selected objects are to be maintained 56. The mandatory fields are shown to the user by clicking on the mandatory fields icon 57. In the example shown, the mandatory fields include author, description, language, last edited and name. Should the user wish to maintain the optional fields and the additional fields, he may click on the respective tabs 58, 59. The progress of the complete content checkin process is reported to the user by progress bar 63. In addition, the user is presented with option icons 64, where the user is able to go back, to the next, to finish or to cancel, for example.
In the embodiment shown in Figure 5, two content resources 65, 66 are checked in at once. Therefore, two tabs 65, 66 are shown: "learningtime_test (v-)" 65 and "two_LO v(-)" 66. Each of the two resources has its own set of meta data and by clicking on the tabs 65, 66, the user can switch between then. The check in icon 67 in front of the "two_LO v(-)" resource 66 indicates that this resource's mandatory meta data is completely maintained, whereas the icon 68 (x) in front of the "learningtime_test (v-)" 65 indicates that there is still mandatory meta data missing.
The "Next" 64a or "Finish" 64b button will only become active once all mandatory meta data for all resources are defined. Therefore completing or continuing the content checkin process is only possible if all mandatory meta data is maintained.
For accessing the central content server 2, the LSO uses, for example, the WebDAV protocol. This protocol allows properties to be set for each object stored on the server. The maintained meta data is exported to the central server as properties of the content. In one embodiment, the authoring environment 15 maintains the meta data, and is arranged to export the maintained meta data to the central content server 2 as properties of the one or more learning resource. In this way, the meta data becomes normal properties of the content and will be treated by the content server 2 in the same way as any other properties. For example, it may be used for indexing the content which will later allow searching for specific properties, that is meta data values, of content.
In the embodiment shown in Figure 1, the learning resource server and the central content server 2 are the same entity. However, in an alternative embodiment they may be different entities.

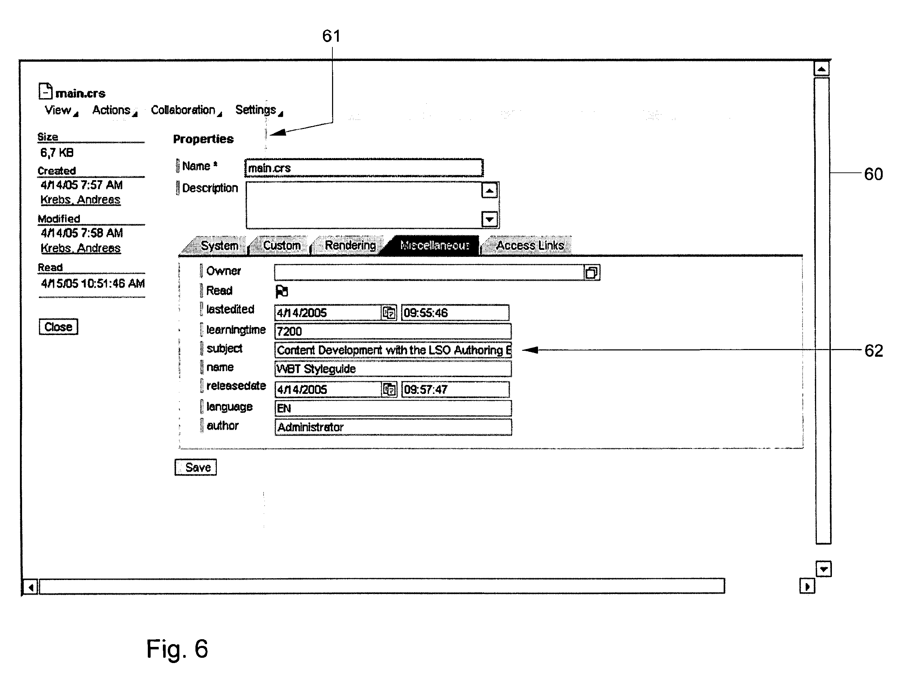

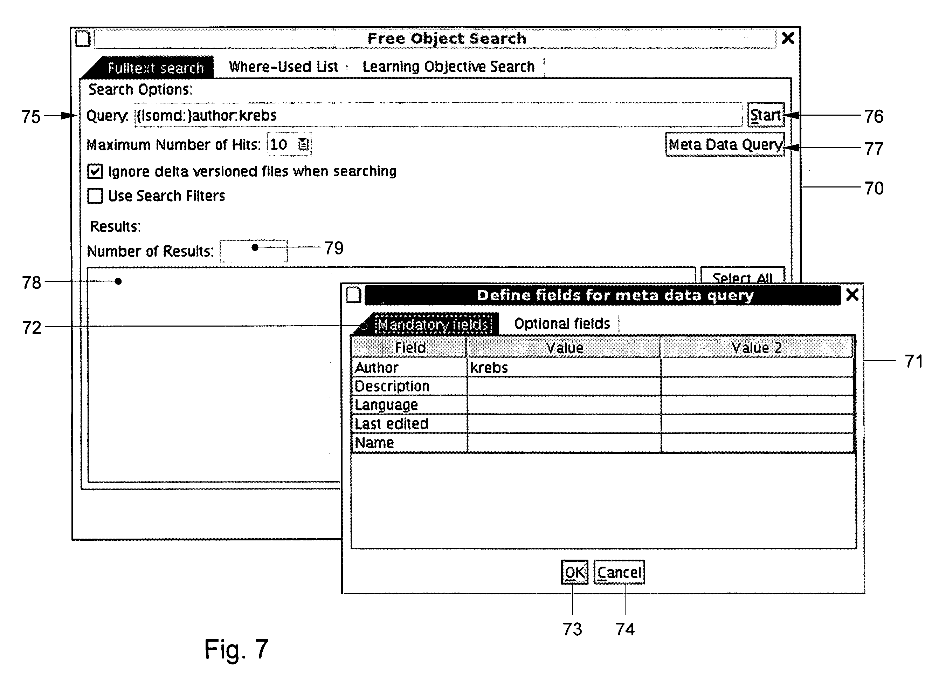

Step 4: As indicated above, the learning resource server may be a WebDAV server. One example of a WebDAV server is a content management system of the SAP Enterprise Portal, which includes a content repository 16. This system 2 is not aware of the LSO meta data customizing however, since meta data is exported as normal WebDAV properties, the information is still available using the tools of viewing/editing properties of content in the Content Management System. Figure 6 shows a user interface of the learning content server showing how properties are displayed in the content management system of the learning resource server 2. In particular, Figure 6 shows a screen shot of how properties are displayed in the content management system of an Enterprise Portal 6.0. The user interface 60 displays properties 61. The subject 62 of the property is content development with the LSO authoring environment.
For searching content with the specific meta data, the authoring environment has a search tool. The search tool uses the customizing information to allow queries to be built for specific fields. Figure 7 shows a user interface 70 of a search tool for searching content according to an embodiment of the invention. With the search tool shown in Figure 7, it is possible to build queries for specific meta data. Since all mandatory meta data is maintained, it is not possible to miss content due to missing meta data. According to an embodiment of the invention, the administration server 4 is arranged to access the one or more learning resource using the properties. Further, the administration server 4 is arranged to search the one or more learning resource using the properties. The search does not have to be carried out on the administration server 4. In an alternative embodiment, the search may be carried out on the content server 2. Alternatively, the search may be carried out on a different indexing server. In one embodiment which is implemented in the learning solution, a separate indexing server is used for carrying out the search. The indexing server is responsible for building indices of the content stored on the content server 2 which then allows fast queries to be performed on the indices. By using an indexing server, an improved searching speed is achieved.
Using the search tool, the user is able to define fields for the meta data query in an additional window 71. The window 71 is displayed when the user presses the meta data query button 77. In one embodiment, the user can define the search to include the mandatory fields by clicking on the mandatory fields tab 72. In alternative embodiments, he may search in other fields, such as the optional and additional fields. Having defined the fields for the search, the user may confirm or cancel the definition with the ok and cancel icons 73, 74.

The search query representing the selected metadata fields is entered in the query field 75 of the user interface 70. In the example shown the search query is to search for all content whose author is called "Krebs" having identifying reference d023936. This is achieved by searching for content with the property "{lsomd:}author" containing "krebs" - this property represents the metadata field author as used in the authoring environment. The user initiates the search by clicking on the start icon 76. The search always searches for meta data. If the query represents a meta data query, the button 77 is simply a more convenient way to enter a meta data query. In this way, the user does not have to know what the properties are called. He can simply use the meta data fields he is familiar with. Once the query dialog 71 is closed, the system creates the resulting search string and enters it in the query field 75. The results are displayed in the results panel 78. In addition, the number of results 79 may also be displayed.

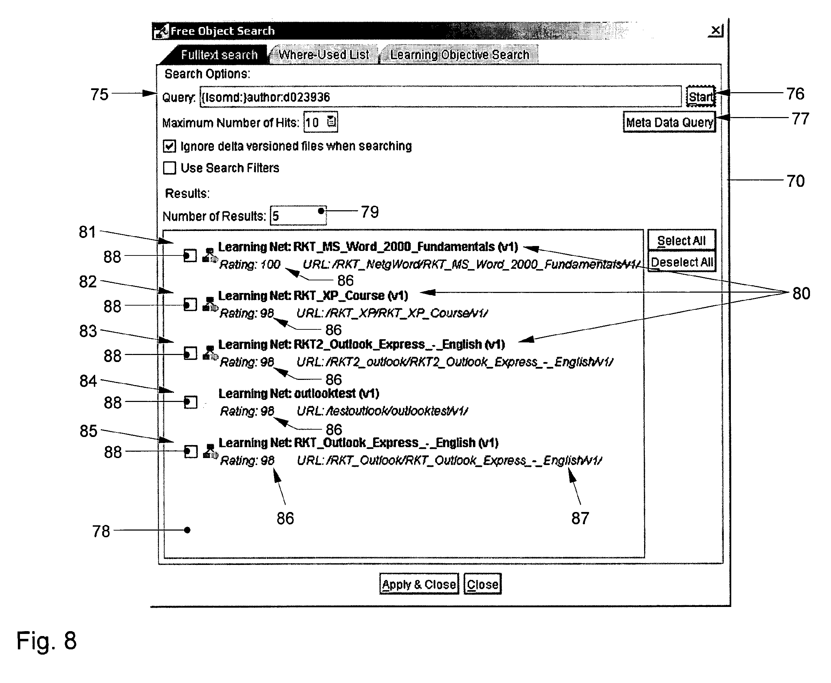

Figure 8 shows a user interface showing the results of a search. In particular, Figure 8 shows the results 81-85 displayed in the results panel 78 shown in Figure 7. The dotted outline indicates that the button has the focus. While the search is in progress the mousepointer becomes a rotating hourglass and input to the user interface is blocked. It is noted that this is not visible in the screen shot. The query field 75 contains the performed query. It is noted that the embodiments shown in Figures 7 and 8 include different queries. The query is a search for documents whose author is "d023936". The results 81-85 are displayed in the display area 78. The results 81-85 include information about the type of the result. In the example given in Figure 8, the objects are Learning Nets, which is the Learning Solution's equivalent to a complete e-learning course. Also given is the object's name 80. The second line of the results 81-85 contains a rating 86 and the URL 87 under which the object is stored on the content server. Also provided in the results display is a check box 88 for each result which can be used to indicate whether the result is to be used for further processing, for example, downloading. The check box 88 may be checked by a user. Alternatively, the search settings may be preset to automatically check the check box 88 for certain types of documents.

Thus, in accordance with embodiments of the present invention, the e-learning system is able to track and maintain meta data during the entire process of e-learning content creation and usage within the authoring environment. For example, in the SAP Learning Solution. It is ensured that the relevant meta data is maintained and accessible. Utilizing the customizable meta data format, the system is both flexible regarding the kind of meta data that can be maintained and on the other hand, customizing meta data as mandatory makes sure no content enters the system without the required meta data.

The invention as described can be implemented in digital electronic circuitry, or in computer hardware, firmware, software, or in combination thereof. An apparatus according to the present invention can be implemented in a computer program product tangibly embodied in a machine readable storage device for execution by a programmable processor; and method steps of the invention can be performed by a programmable processor executing a program of instructions to perform functions of the invention by operating on input data and generating output. The invention can be implemented in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Typically, a processor will receive instructions and data from a read-only memory and/or a random access memory. Typically, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example, semiconductor memory devices, such as EEPROM, and flash memory devices; magnetic disks such as internal hard disks and removable disks; magneto-optical disks; and CD-ROM disks. Any of the foregoing can be supplemented by, or incorporated in ASICs (application specific integrated circuits).
To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.
Whilst specific embodiments of the invention have been described above, it will be appreciated that the invention may be practiced otherwise than as described. The description is not intended to limit the invention. For example, the order steps be performed of the present invention is not limited to that order prescribed in the claims.

## Claims

1. An e-learning system for delivering one or more learning resource to a common group of users at one or more user terminals, the system including:
a learning resource server for storing the one or more learning resource for delivery to at least one of the common group of users at one or more user terminals, an administration server, arranged to serve the common group of users at the one or more user terminals, for tracking and maintaining a set of meta data for describing the learning resource in accordance with the common group of users' requirements.

2. An e-learning system according to claim 1, wherein the set of meta data is a set of customizable meta data in a customizable format.

3. An e-learning system according to claim 1, wherein the meta data is provided in a format which includes a definition with respect to a property of a field which the meta data describes.

4. An e-learning system according to claim 3, wherein the property includes whether the field is mandatory or optional.

5. An e-learning system according to claim 2, wherein the administration server is provided with a user interface generator for generating a user interface for interfacing with a user on behalf of the common group of users, wherein the user, via the user interface, customizes a predetermined one or more meta data as mandatory, so that the one or more learning resource enters the e-learning system with the required meta data.

6. An e-learning system according to any of preceding claims 1-5, wherein the administration server includes an authoring environment including a user interface for interfacing with a user on behalf of the common group of users, for authoring the one or more learning resource.

7. An e-learning system according to claim 6, wherein the authoring environment is arranged to import one or more learning resource from a third party learning resource server and having meta data in a third party format, and transform the meta data in the third party format in to the meta data format used by the e-learning system.

8. An e-learning system according to claim 6, wherein the authoring environment is arranged to create the one or more learning resource.

9. An e-learning system according to claim 7, wherein the authoring environment is arranged to edit the one or more learning resource.

10. An e-learning system according to any of preceding claims 7-9, wherein during processing of the one or more learning resource by the authoring environment, the one or more learning resource is stored on a local computer.

11. An e-learning system according to any of preceding claims 1-10, wherein the meta data is maintained during an editing phase.

12. An e-learning system according to any of preceding claims 6-11, wherein the authoring environment is arranged to provide feedback with respect to the not maintained meta data.

13. An e-learning system according to claim 12, wherein the feedback includes at least one of an error and a warning.

14. An e-learning system according to claim 13, wherein the authoring environment provides an error if meta data is not maintained in a mandatory field.

15. An e-learning system according to claim 13 or 14, wherein the authoring environment provides a warning if meta data is not maintained in an optional field.

16. An e-learning system according to any of preceding claims 6-15, wherein the learning resource server is a central server, and the authoring environment comprises a check-in tool, the check-in tool being arranged so that once the user has completed one or more activities in the authoring environment, the one or more learning resource processed in the authoring environment is checked into the central server.

17. An e-learning system according to claim 16, wherein once the one or more learning resource has been checked into the central server, it becomes available to the common group of users.

18. An e-learning system according to any of preceding claims 16 or 17, wherein the check-in tool is arranged to check-in one or more learning resource to the central server only when the mandatory meta data is maintained according to a predefined customizable profile determined in accordance with the common group of users' requirements.

19. An e-learning system according to any of preceding claims 10-18, wherein the authoring environment maintains the meta data, and is arranged to export the maintained meta data to the central content server where they may be searched.

20. An e-learning system according to claim 19, wherein the maintained meta data is exported to the central content server as properties of the one or more learning resource.

21. An e-learning system according to claim 19, wherein the meta data are directly exported to a database where they are stored as entries in a table.

22. An e-learning system according to claims 20, wherein the administration server is arranged to access the one or more learning resource using the properties.

23. An e-learning system according to any of the preceding claims, wherein the administration server is arranged to search the one or more learning resource using the properties.

24. An e-learning system according to any of the preceding claims, wherein a content server is arranged to search the one or more learning resource using the properties.

25. An e-learning system according to any of the preceding claims, wherein an indexing server is arranged to search the one or more learning resource using the properties.

26. An e-learning system according to any of the preceding claims 6-26, wherein the authoring environment is arranged to at least one of import and export meta data in a format by transforming the format into or from another meta data format in a predefined standard.

27. An e-learning system according to any of the preceding claims, wherein the meta data is stored together with the one or more e-learning resource.

28. An e-learning system according to any of the preceding claims 1, 2 or 5, further comprising a user interface generator for generating a user interface which a user can interact with to customize the meta data in accordance with the user's or the common group of users' requirements.

29. An e-learning system according to claim 28, wherein the user interface includes a screen displaying one or more fields wherein at least one of a meta data identification, a mandatory indication, a data type and a metadata description may be entered, respectively.

30. An e-learning system according to any preceding claims 1-29, wherein the user interface includes a screen wherein which the user can edit meta data.

31. An e-learning system according to claim 30, wherein the screen displays the mandatory fields, optional fields and additional fields.

32. A method of e-learning, the method comprising delivering one or more learning resource to a common group of users at one or more user terminals, the method further including:
storing in a learning resource server the one or more learning resource for delivery to at least one of the common group of users at one or more user terminals,
serving the common group of users at the one or more user terminals, tracking and maintaining meta data for describing the learning resource in accordance with the common group of users' requirements.

33. A user terminal comprising means operable to perform the method of claim 32.

34. A program storage device readable by a processing apparatus, the device embodying a program of instructions executable by the processor to perform the method of claim 32.
